# EUROPÄISCHE PATENTSCHRIFT

(11) **EP 3 003 922 B1**
(45) Veröffentlichungstag und Bekanntmachung des Hinweises auf die Patenterteilung: **02.05.2018**
(21) Anmeldenummer: 14726967.4
(22) Anmeldetag: 27.05.2014
(51) Int. Cl.: B65G 21/06, B65G 21/20

(54) **BEHÄLTERBEHANDLUNGSANLAGE MIT AUSWECHSELBAREM FORMATTEIL**
CONTAINER-HANDLING INSTALLATION HAVING AN EXCHANGEABLE FORMAT PART
SYSTÈME DE MANUTENTION DE RÉCIPIENTS ÉQUIPÉ D'UNE PIÈCE DE FORMAT AMOVIBLE

(30) Priorität: 07.06.2013 DE 102013105913
(43) Veröffentlichungstag der Anmeldung: 13.04.2016
(73) Patentinhaber: KHS GmbH, 44143 Dortmund (DE)
(72) Erfinder: WOLF, Uwe, 55593 Rüdesheim (DE)
(86) Internationale Anmeldenummer: PCT/EP2014/060916
(87) Internationale Veröffentlichungsnummer: WO 2014/195181

(56) Entgegenhaltungen:
- EP-A2- 0 063 848
- DE-A1-102009 018 731
- DE-T2- 69 902 944
- US-A- 5 782 339

## Beschreibung

Die Erfindung betrifft eine Behälterbehandlungsanlage mit mindestens einem auswechselbaren Formatteil zum Führen von Behältern und einen Riegelverschluss zum lösbaren Verbinden des Formatteils mit einer Verriegelungsvorrichtung.

Behälterbehandlungsanlagen sind in unterschiedlichen Ausführungen, z. B. als Füllmaschinen, Etikettiermaschinen, Inspektionsmaschinen oder Rinser, bekannt. Ebenso sind verschiedene Arten von Behältern, wie beispielsweise Flaschen oder Dosen, bekannt die in der Behälterbehandlungsanlage transportiert werden. Diese können aus Materialien wie Glas, Kunststoff oder Metall bestehen und sowohl in ihrer Größe als auch Form voneinander abweichen. Die Behälter sind insbesondere zum Befüllen mit Flüssigkeiten, wie beispielsweise Getränken ausgebildet.

Die Behälterbehandlungsanlagen weisen Führungseinheiten, insbesondere Formatteile die zum Durchführen der Behälter durch die Anlage ausgebildet sind, auf. Dabei werden die Behälter zum Bearbeiten beispielsweise zum Befüllen oder Etikettieren entlang der Führungseinheiten durch die Behälterbehandlungsanlage von einer Bearbeitungsstation zur Nächsten geführt.

Die Führungseinheiten, insbesondere rotative Führungseinheiten, wie beispielsweise sternartig ausgebildete Formatteile oder Anlagenabschnitte, in denen die Behälterbehandlung erfolgt, sind auf die jeweiligen Eigenschaften der Behälter, wie beispielsweise die Behälterform, das Behältergewicht und/oder die Behältergröße angepasst.

Damit die Behälterbehandlungsanlage für unterschiedliche Behälter einsetzbar ist, müssen die Formatteile auf die unterschiedlichen Behältergrößen, d. h. insbesondere die Behälterhöhe und den Behälterdurchmesser ausgerichtet sein. So ist für eine sichere Führung beispielsweise der ideale Kontaktpunkt des Formatteils an einer Flasche mit geringer Höhe im Verhältnis zu seiner Position in der Behälterbehandlungsanlage deutlich niedriger als bei einer besonders hohen Flasche. Aus diesem Grund sind die Führungsbereiche zumindest teilweise auswechselbar, sodass bei der Umstellung der Behälterbehandlungsanlage von einer ersten Behältergröße auf eine zweite Behältergröße die Formatteile ausgewechselt werden. Neben der kostenintensiven Bereithaltung von unterschiedlichen Formatteilen für jede Behältergröße beziehungsweise Gruppe von Behältergrößen oder Behälterdesigns, ist insbesondere der Austausch der Formatteile aufwendig und kostenintensiv, da die Formatteile üblicherweise mit einem Baukörper der Behälterbehandlungsanlage fest verschraubt sind und das Lösen derartiger Schraubverbindungen zeitaufwendig ist.
Die EP 2 116 490 B1 schlägt eine Verbindungsvorrichtung für Formatteile vor, bei der die Formatteile zum Lösen aus der Behälterbehandlungsanlage zuerst in Horizontalrichtung verschoben und dann vertikal aus der Maschine entnommen werden. Die Vorrichtung ist jedoch insbesondere bei der Verwendung von Glasflaschen nachteilig, da durch auftretenden Glasbruch häufig Glassplitter die Horizontalbewegung der Formatteile verhindern, so dass das Auswechseln der Formatteile deutlich erschwert wird.
In der DE 10 2000 018731 A1 wird ein Formatteil umfassend Teilelemente vorgeschlagen, die über ein Verbindungselement miteinander verbindbar sind, und wobei das Verbindungselement ein erstes und ein zweites Verbindungsteilelement aufweist, die miteinander korrespondierende und verriegelbare Aufnahmen aufweisen. Das Dokument offenbart auch eine Behälterbehandlungsanlage nach dem Oberbegriff des Anspruchs 1. Weiterhin ist aus der DE 699 02 944 T2 eine Befestigungsvorrichtung bekannt geworden, die als Verriegelungsmechanismus einen Bajonettverschlusses und einen zugehörigen Einspannmechanismus aufweist, die durch Betätigung eines drehbaren Stellorgans gesteuert werden, wobei weiterhin ein Kupplungsmittel umfasst ist, welches zwischen dem Stellorgan einerseits und dem Verriegelungs- und dem Einspannmechanismus andererseits angeordnet ist.
Der Erfindung liegt somit die Aufgabe zugrunde, eine Behälterbehandlungsanlage 10820 WO/EP mit einem besonders einfach auswechselbaren Formatteil bereitzustellen.
Die Erfindung löst die Aufgabe durch eine Behälterbehandlungsanlage mit den Merkmalen des Anspruchs 1. Vorteilhafte Weiterbildungen der Erfindung sind in den abhängigen Ansprüchen angegeben.
Die erfindungsgemäße Behälterbehandlungsanlage weist ein auswechselbares Formatteil zum Führen von Behältern und einen Riegelverschluss zum lösbaren Verbinden des Formatteils mit einer Verriegelungsvorrichtung auf, wobei der Riegelverschluss einen zwischen einer ersten Position und einer zweiten Position drehbaren Riegel aufweist, wobei der Riegel das Formatteil in der ersten Position freigibt und in der zweiten Position verriegelt und der Riegelverschluss dazu ausgebildet ist, das Formatteil und die Verriegelungsvorrichtung in Längsachsenrichtung des Riegelverschlusses zu verriegeln und zu verspannen.
Unter dem Verriegeln wird eine Entfernungssicherung verstanden, die ein Entfernen des Formatteils aus der Behälterbehandlungsanlage verhindert. Die Verspannung fixiert das Formatteil zusätzlich fest mit der Verriegelungsvorrichtung, so dass das verspannte Formatteil in einer festen Position angeordnet ist. Hierdurch ist eine besonders schnelle Demontage und Montage des Formatteils möglich und das Formatteil ist sicher an der Behälterführungsanlage befestigt.

Gemäß der Erfindung ist der Riegelverschluss derart ausgebildet, dass mit einer ersten Drehung einer als Drehgriff an seinem oberen Ende ausgebildeten Betätigungseinheit die Verdrehung des Riegels von der ersten in die zweite Position und mit einer weiteren Drehung die Verspannung des Riegels mit der Verriegelungsvorrichtung erfolgt. Sowohl die erste als auch die zweite Drehung können jeweils als Teilumdrehung durchgeführt werden. Bei jeder Drehung kann beispielsweise eine Vierteldrehung, d.h. eine Drehung mit einem Verdrehwinkel von 90°, erfolgen. Auch sind Riegelverschlüsse denkbar, bei denen der Drehwinkel kleiner oder größer 90° insbesondere zwischen 45° und 135° beträgt.
Die Betätigungseinheit ist über eine Drehachse mit dem Riegel verbunden und beispielsweise an einer zentralen Position am Riegel oder auch an einem Endabschnitt des Riegels angeordnet. Die Positionierung der Drehachse am Riegel ist abhängig von der notwendigen Auslenkung des Riegels von seiner ersten in die zweite Position bzw. von seinen möglichen verbaubaren Längenabmessungen.
Die Drehachse kann in Längsachsenrichtung des Riegelverschlusses angeordnet sein. So kann beispielsweise an einem ersten Ende der Drehachse der Riegel und an einem dem ersten Ende gegenüberliegendem zweiten Ende der Drehachse eine Drehvorrichtung, wie bspw. Eine Betätigungseinheit zum Drehen der Spannachse angeordnet sein. Die Drehachse kann an dem Riegelverschluss mit einer drehbaren Lagerung angeordnet sein. In vorteilhafter Weise weist die Drehachse zwei drehbare Lagerungen, eine im Bereich eines oberen Formatteilelements und eine im Bereich eines unteren Formatteilelements, auf.

Die Verriegelungsvorrichtung kann unterschiedlich ausgebildet sein. So ist es beispielsweise möglich, den Riegel hinter einen Vorsprung oder in eine Ausnehmung eingreifen zu lassen. Besonders bevorzugt weist die Verriegelungsvorrichtung eine zum Eingriff des Riegels ausgebildete laschenförmige Ausnehmung auf. Die laschenförmige Ausnehmung ist zum Riegel derart angeordnet, dass der Riegel bei seiner Drehbewegung von der ersten in die zweite Position mit einem freien Ende in die laschenförmige Ausnehmung eingreift.

Um den Riegel an der laschenförmigen Ausnehmung zu positionieren und/oder zu fixieren, weist die Verriegelungsvorrichtung eine zum Riegel korrespondierende Rastvorrichtung auf. Die Rastvorrichtung kann beispielsweise als Federstift mit einer am Riegel angeordneten Ausnehmung ausgebildet sein. Vorteilhafterweise ist die Rastvorrichtung jedoch als Ausnehmung an der Verriegelungsrichtung ausgebildet, die in ihrer Form korrespondierend zum Riegel ausgebildet ist. Hierdurch kann in besonders einfacher Weise eine Fixierung des Riegels an der Verriegelungsvorrichtung erreicht werden.

Gemäß einer Weiterbildung der Erfindung weist die Verriegelungsvorrichtung ein zum Riegel korrespondierend ausgebildetes Riegelblech auf. Besonders bevorzugt weist das Riegelblech eine Durchgangsöffnung auf, wobei der Querschnitt der Durchgangsöffnung derart an den Querschnitt des Riegels angepasst ist, dass der Riegel in einer ersten Ausrichtungsposition zum Riegelblech durch die Durchgangsöffnung durchführbar ist und in einer zweiten Ausrichtungsposition das Riegelblech die Durchführung des Riegels durch das Riegelblech verhindert.

Das Riegelblech bzw. das Riegelblech mit Durchgangsöffnung eignet sich insbesondere für eine sehr kompakte Ausführung der Verriegelungsvorrichtung. So kann der Riegel in einer Ausgangsposition senkrecht über der Ebene des Riegelblechs angeordnet sein. Zum Fixieren und Verspannen wird der Riegel in das Riegelblech ein- oder durch dieses hindurchgeführt. Die Verriegelung, d.h. die Fixierung und Verspannung, findet dann im Bereich des Bauraums des Riegelblechs statt. Hierdurch ist eine besonders kleine Baugröße der Verriegelungsvorrichtung möglich.
Gemäß einer Weiterbildung der Erfindung weist die Verriegelungsvorrichtung eine Positioniervorrichtung zum Positionieren des Formatteils auf. Unter einer Positioniervorrichtung wird eine Vorrichtung verstanden, die das Formatteil durch das Verbinden oder Einführen in die Positioniervorrichtung in seine in der Behälterbehandlungsanlage vorgesehene Position einfügt. Hierdurch ist auf besonders einfache Weise neben einer Fixierung und Verspannung auch die richtige Positionierung des Formatteils in der Behälterbehandlungsanlage möglich.
Um eine besonders kompakte Bauweise der Verriegelungsvorrichtung und Positioniervorrichtung zu ermöglichen, ist die Positioniervorrichtung besonders bevorzugt als Formatteilstütze zum Anordnen des Formatteils mit einer Verriegelungsvorrichtung ausgebildet.
Unter einer Formatteilstütze wird ein Baukörper der Behandlungsanlage verstanden, auf den das Formatteil aufgelegt und abgestützt werden kann. Die Formatteilstütze positioniert dabei das Formatteil in einer vorgegebenen Einbauposition (beispielsweise einer Einbauhöhe) in der Behälterbehandlungsanlage.
Um eine besonders sichere und gute Verspannung des Formatteils mit der Behälterbehandlungsanlage zu erreichen, durchgreift der Riegelverschluss das Formatteil. Unter dem Durchgreifen wird das vollständige Durchführen des Riegelverschlusses durch das Formatteil verstanden. Dabei kann ein in das Formatteil eingeführter Riegelverschluss beispielsweise mit einem ersten Abschnitt oberhalb und einem zweiten Abschnitt unterhalb aus dem Formatteil herausragen. Offenbart, jedoch nicht Teil der in den Ansprüchen definierten Erfindung ist ferner ein Verfahren zum Auswechseln eines zum Führen von Behältern ausgebildeten Formatteils einer Behälterbehandlungsanlage mit den Schritten: Entspannen eines Riegelverschlusses, der ein erstes Formatteil und eine Verriegelungsvorrichtung verbindet, durch Drehen einer mit dem Riegel verbundenen Betätigungseinheit, Drehen des Riegels von einer verriegelten zweiten Position in eine entriegelte erste Position, Entnahme des Formatteils senkrecht zu der Horizontalachse der Behälterbehandlungsanlage, senkrechtes Einsetzen eines zweiten Formatteils in die Behälterbehandlungsanlage, Drehen eines an dem zweiten Formatteil angeordneten Riegels von der ersten Position in die zweite Position, Spannen des Schnellverschlusses durch ein weiteres Drehen der Betätigungseinheit.

Unter dem Entspannen wird die Lösung des Spanndruckes, der das Formatteil mit der Verriegelungsrichtung fest verspannt, verstanden. Die Drehung zum Lösen der Verspannung kann eine Teilumdrehung sein. So kann der Riegelverschluss beispielsweise derart ausgebildet sein, dass durch eine Viertel- oder Halbumdrehung der Betätigungseinheit die Spannung gelöst wird, jedoch weiterhin eine Verriegelung des Riegels an der Verriegelungsvorrichtung besteht.

Somit ist das Formatteil nach der ersten Drehung -d.h. nach der Entspannungweiterhin an der Behälterbehandlungsanlage verriegelt, jedoch besteht keine feste Verspannung mehr. Die weitere Drehung des Riegels führt zum Lösen der Verriegelung, d.h. der Riegel wird von einer zweiten Position in eine erste Position bewegt. Bspw. wird der Riegel aus der Verriegelungsvorrichtung herausgedreht. Das Formatteil kann in der ersten Position des Riegels aus der Behälterbehandlungsanlage entnommen werden. Da keine weitere Verriegelung des Formatteils an der Behälterbehandlungsanlage vorhanden ist, kann die Entnahme des Formatteils senkrecht, d.h. in Längsachsenrichtung der Behälterbehandlungsanlage, erfolgen.

Zur Montage eines neuen Formatteils wird dieses mit dem Riegelverschluss senkrecht in die Behälteranlage eingesetzt. Der an dem Riegelverschluss des zweiten Formatteil angeordnete Riegel wird ebenfalls mit einer Teilumdrehung von seiner ersten Position in seine zweite Position gedreht, sodass das ausgewechselte Formatteil an der Behälterbehandlungsanlage verriegelt ist. Zum festen Verspannen des Formatteils erfolgt eine weitere Drehung der Betätigungseinheit. Auch diese Drehung kann wieder als Teilumdrehung erfolgen, beispielsweise als Viertel-, Drittel- oder Halbdrehung.

Besonders geeignet für die Riegelverschlüsse sind Drehriegelkompressionsverschlüsse, die eine entsprechende zweistufige Verriegelung und Verspannung des an ihn angeordneten Riegels durchführen.
Das Verfahren ermöglicht in besonders vorteilhafter Weise ein sehr schnelles Lösen der Formatteile und ein sicheres und schnelles Befestigen der Formatteile, wodurch die Demontage und die Montage des Formatteils in der Behälterbehandlungsanlage besonders schnell und sicher durchgeführt werden kann. Durch die vertikale Entnahme des Formatteils wird außerdem gewährleistet, dass auch bei Vorhandensein von Fremdkörper - wie bspw. Glassplittern - im Bereich des Formatteils, dieses besonders einfach demontiert werden kann.

Im Weiteren wird die Erfindung anhand eines Ausführungsbeispiels eines Riegelverschlusses näher beschrieben. Es zeigt:

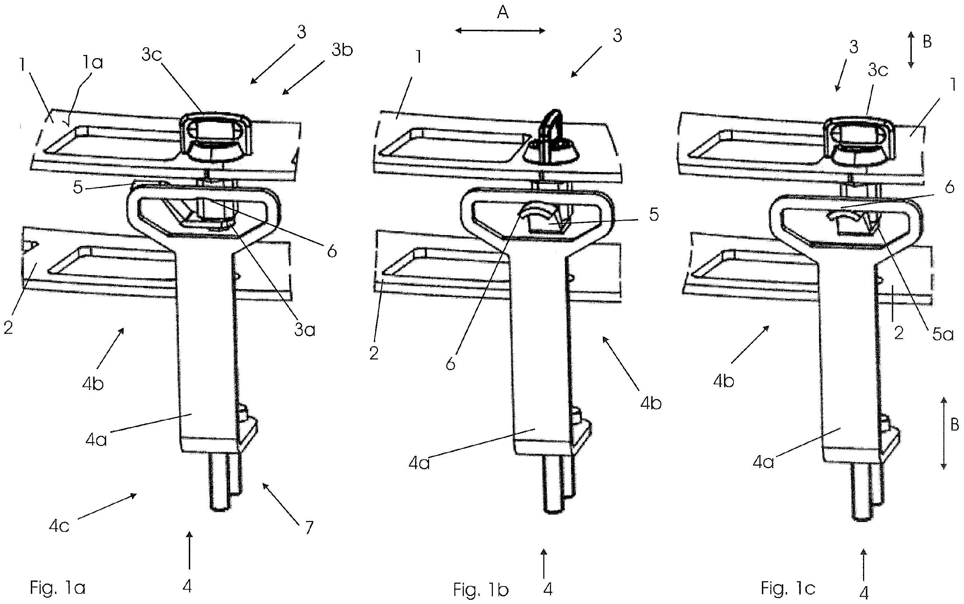

- Figur 1a - 1c: eine schematische Ansicht eines an einem Formatteil angeordneten Riegelverschlusses mit einer Verriegelungsvorrichtung;
Die Figuren 1a bis 1c zeigen einen Ausschnitt aus einer oberen Formatteilebene 1 und einer unteren Formatteilebene 2 eines Formatteils (hier nicht dargestellt) zum Führen von Behältern. An der oberen Formatteilebene 1 ist ein Riegelverschluss 3 mit einem Riegel 5 angeordnet. Eine um den Riegelverschluss 3 ausgerichtete Verriegelungsvorrichtung 4 weist einen senkrechten Steg 4a mit einer Verriegelungslasche 4b auf, die korrespondierend mit dem Riegel 5 ausgebildet ist. An einer der Verbindungslasche 4b gegenüberliegenden Seite der Verriegelungsvorrichtung 4 ist eine Verbindungsvorrichtung 4c zum Befestigen der Verriegelungsvorrichtung an einem Baukörper (hier nicht dargestellt) der Behälterbehandlungsanlage (hier nicht dargestellt) angeordnet.
Der Riegel 5 ist an einem unteren Ende 3a des Riegelverschlusses 3 und um eine Längsachse (hier nicht dargestellt) des Riegelverschlusses 3 drehbar gelagert ist. An einem dem unteren Ende 3a gegenüberliegendem oberen Ende 3b weist der Riegelverschluss 3 eine als Drehgriff 3c ausgebildete Betätigungseinheit auf. Dabei ist der Drehgriff 3c an der Oberseite 1a des oberen Formatteilelementes 1 angeordnet und somit für den Benutzer auch im eingebauten Zustand des Formatteils gut zugänglich.

Figur 1 a zeigt den Riegel 5 in einer ersten Position. Der Riegel 5 ist entspannt und das Formatteil kann senkrecht aus der Behälterbehandlungsanlage entnommen werden.

Figur 1b zeigt den mit einer ersten Drehung um ca. 90° verdrehten Riegel 5. Der Riegel 5 ist in Eingriff mit der Verriegelungslasche 4b. Der Riegel 5 ist im Querschnitt leicht gewölbt ausgebildet und in eine mit der Wölbung des Riegels 5 korrespondierend ausgebildeten Rastvorrichtung 6 an der Verriegelungslasche 4b eingerastet. In dieser Position versperrt (verriegelt) der Riegel 5 das Formatteil, so dass dieses nicht aus der Behälterbehandlungsanlage entnommen werden kann.

Figur 1c zeigt den Riegelverschluss 3, in einer mit der Verriegelungsvorrichtung 4 verspannten Position. Der Riegel 5 ist weiterhin in der Rastvorrichtung 6 eingerastet. Der Drehgriff 3c ist mit einer zweiten Drehung gegen den Uhrzeigersinn weiter verdreht, sodass eine Verspannung des Riegelverschlusses 3 mit der Verriegelungsvorrichtung 4 vorliegt.

Mit dieser (zweiten) weiteren Drehung wurde eine mit einem Riegelgrund 5a verbundene Drehachse (hier nicht dargestellt) gedreht, die den Riegelgrund 5a - und den Riegel 5 - in vertikaler Richtung (angedeutet durch Pfeil B) und somit in Richtung der oberen Formatteilebene 1 zieht. Durch diese Aufwärtsbewegung des Riegels 5 erfolgt eine Verspannung des Riegelverschlusses 3 mit der Verriegelungsvorrichtung 4. Die Verspannung wirkt in Längsrichtung (vertikal "B"). Die Formatteilelemente sind durch die Verspannung mit der Verriegelungsvorrichtung 4 verrutschsicher in der Behälterbehandlungsanlage gelagert.

## Patentansprüche

1. Behälterbehandlungsanlage mit mindestens einem auswechselbaren Formatteil zum Führen von Behältern, einen Riegelverschluss (3) zum lösbaren Verbinden des Formatteils mit einer Verriegelungsvorrichtung (4), wobei
- der Riegelverschluss (3) einen zwischen einer ersten Position und einer zweiten Position drehbaren Riegel aufweist,
- wobei der Riegel (5) das Formatteil in der ersten Position freigibt und in der zweiten Position verriegelt und
- der Riegelverschluss (3) dazu ausgebildet ist, das Formatteil und die Verriegelungsvorrichtung in Längsachsenrichtung des Riegelverschlusses (3) zu fixieren und zu verspannen, wobei an einer oberen Formatteilebene (1) der Riegelverschluss (3) mit dem Riegel (5) angeordnet ist, und wobei die um den Riegelverschluss (3) ausgerichtete Verriegelungsvorrichtung (4) einen senkrechten Steg (4a) aufweist, mit einer Verriegelungslasche (4b), welche korrespondierend mit dem Riegel (5) ausgebildet ist, wobei an einer der Verbindungslasche (4b) gegenüberliegenden Seite der Verriegelungsvorrichtung (4) eine Verbindungsvorrichtung (4c) zum Befestigen der Verriegelungsvorrichtung (4) an einem Baukörper der Behälterbehandlungsanlage angeordnet ist,
**dadurch gekennzeichnet, dass**
der Riegelverschluss (3) eine an seinem oberen Ende (3b) als Drehgriff (3c) ausgebildete Betätigungseinheit aufweist, und derart ausgebildet ist, dass
- mit einer ersten Drehung der Betätigungseinheit die Verdrehung des Riegels (5) von der ersten Position in die zweite Position und
- mit einer weiteren Drehung, ein Verspannen des Riegels (5) mit der Verrieglungsvorrichtung (4) erfolgt.

2. Behälterbehandlungsanlage nach Anspruch 1, **dadurch gekennzeichnet, dass** die Verriegelungsvorrichtung (4) eine zum Eingriff des Riegels (5) ausgebildete laschenförmige Ausnehmung (4b) aufweist.

3. Behälterbehandlungsanlage nach einem der vorhergehenden Ansprüche 1 oder 2, **dadurch gekennzeichnet, dass** die Verriegelungsvorrichtung (4) eine zum Riegel (5) korrespondierende Rastvorrichtung (6) zum Positionieren des Riegels (5) an der Verriegelungsvorrichtung (4) aufweist.

4. Behälterbehandlungsanlage nach einem der vorhergehenden Ansprüche, **dadurch gekennzeichnet, dass** die Verriegelungsvorrichtung (4) eine Positioniervorrichtung zum Positionieren des Formatteils aufweist.

## Claims

1. Container-handing installation with at least one exchangeable format part for guiding containers, a catch-closure means (3) for connecting the format part in a releasable manner to a locking device (4), wherein
- the catch-closure mechanism (3) comprises a catch which can be rotated between a first position and a second position,
- wherein the catch (5), in the first position, frees the format part, and in the second position locks it, and
- the catch-closure mechanism (3) is designed to fix, and to brace, the format part and the locking device in the direction of the catch-closure mechanism (3), wherein
- on an upper format part plane (1), the catch-closure mechanism (3) is arranged with the catch (5), and wherein the locking device (4), aligned around the catch-closure mechanism (3), comprises a perpendicular web (4a), with a locking tab (4b), which is configured to correspond with the catch (5), wherein, at a side of the locking device (4) opposite the locking tab (4b), a connecting device (4c) is arranged, for securing the locking device (4) to a structural body of the container-handling installation,
**characterised in that**
the catch-closure mechanism (3) comprises at its upper end (3b) an actuation unit, configured as a rotating handle (3c), and configured in such a way that
- with a first rotation of the actuation unit, the rotation takes place of the catch (5) from the first position into the second position, and
- with a further rotation, a bracing of the catch (5) with the locking device (4) takes place.

2. Container-handing installation according to claim 1, **characterised in that** the locking device (4) comprises a tab-shaped cut-out opening (4b), configured for the engagement of the catch (5).

3. Container-handing installation according to any one of claims 1 or 2, **characterised in that** the locking device (4) comprises an engagement device (6) corresponding to the catch (5), for positioning the catch (5) at the locking device (4).

4. Container-handing installation according to any one of the preceding claims, **characterised in that** the locking device (4) comprises a positioning device for positioning the format part.

## Revendications

1. Installation de manutention de contenants comprenant au moins une pièce de format remplaçable servant à guider des contenants, un système de fermeture à verrou (3) servant à relier de manière amovible la pièce de format à un dispositif de verrouillage (4), dans laquelle
- le système de fermeture à verrou (3) présente un verrou pouvant tourner entre une première position et une deuxième position,
- dans laquelle le verrou (5) débloque la pièce de format dans la première position et la verrouille dans la deuxième position, et
- le système de fermeture à verrou (3) est réalisé afin de fixer et de précontraindre la pièce de format et le dispositif de verrouillage dans le sens de l'axe longitudinal du système de fermeture à verrou (3), dans laquelle
le système de fermeture à verrou (3) comprenant le verrou (5) est disposé au niveau d'un plan de pièce de format (1) supérieur, et dans laquelle le dispositif de verrouillage (4) orienté autour du système de fermeture à verrou (3) présente une entretoise (4a) perpendiculaire comprenant une bride de verrouillage (4b), qui est réalisée de manière à correspondre au verrou (5), dans laquelle un dispositif de liaison (4c) servant à fixer le dispositif de verrouillage (4) au niveau d'une structure de l'installation de manutention de contenants est disposé au niveau d'un côté, faisant face à la bride de liaison (4b), du dispositif de verrouillage (4),
**caractérisée en ce que**
le système de fermeture à verrou (3) présente une unité d'actionnement réalisée au niveau de son extrémité (3b) supérieure sous la forme d'une poignée rotative (3c) et est réalisé de telle manière que
- la rotation du verrou (5) de la première position dans la deuxième position est effectuée avec une première rotation de l'unité d'actionnement, et
- une précontrainte du verrou (5) avec le dispositif de verrouillage (4) est effectuée avec une autre rotation.

2. Installation de manutention de contenants selon la revendication 1, **caractérisée en ce que** le dispositif de verrouillage (4) présente un évidement (4b) en forme de bride réalisé afin de venir en prise avec le verrou (5).

3. Installation de manutention de contenants selon l'une quelconque des revendications précédentes 1 ou 2, **caractérisée en ce que** le dispositif de verrouillage (4) présente un dispositif d'enclenchement (6) correspondant au verrou (5), servant à positionner le verrou (5) au niveau du dispositif de verrouillage (4).

4. Installation de manutention de contenants selon l'une quelconque des revendications précédentes, **caractérisée en ce que** le dispositif de verrouillage (4) présente un dispositif de positionnement servant à positionner la pièce de format.
